# DEMANDE DE BREVET EUROPEEN

(11) **EP 1 331 613 A1**
(43) Date de publication de la demande: **30.07.2003**
(21) Numéro de dépôt: 02447011.4
(22) Date de dépôt: 25.01.2002
(51) Int. Cl.: G07F 7/02, G07F 9/02, G07F 11/14, G07F 11/44

(54) **Distributeur de produit utilisé pour satisfaire à une dépendance**

(71) Demandeur: Ervi-Process, 6210 Les Bons Villers (Villers-Perwin) (BE)
(72) Inventeur: Bultot, Vincent, 7021 Havré (BE); Bertrand, Eric, 6210 Les Bons Villers, (Villers-Perwin) (BE)
(74) Mandataire: Quintelier, Claude

(57) **Abrégé**

Distributeur de produit utilisé pour satisfaire à une dépendance lequel distributeur est muni d'une mémoire agencée pour stocker des données relatives à chaque utilisateur et reprenant une quantité journalière du produit à distribuer à l'utilisateur. Le distributeur comporte également des moyens pour identifier chacun des utilisateurs et leur distribuer, après identification, leur ration journalière.

## Description

La présente invention se rapporte à un distributeur de produit utilisé pour satisfaire à une dépendance, pourvu d'un mécanisme de distribution lié à une unité de gestion agencée pour déterminer un taux de distribution dudit produit, cette unité de gestion étant reliée à une horloge.

Les centres fermés, et en particulier les centres psychiatriques, accueillent de nombreux types de patients mentalement déficients ou mentalement affaiblis. Ces patients peuvent être alcooliques, toxicomanes, maniaco-dépressifs, dépressifs ou encore peuvent présenter des comportement délirants, agressifs, etc. Dans ce contexte, la prise de produit utilisé pour satisfaire à une dépendance, en particulier la cigarette, pose un réel problème tant au point de vue de la gestion du patient qu'au point vue de la gestion administrative de ces produits.

En effet, la consommation de ces produits, par exemple des cigarettes, par ce groupe de consommateurs peut être difficilement gérable par le patient lui-même. Par exemple, le patient, suite à un stress ou à tout autre problème, peut faire varier sa consommation de manière disproportionnée. Il faut donc que le personnel de ces centres fermés gère et règle les besoins des patients en cigarettes, et ceci de manière active en leur fournissant la quantité dont le patient a réellement besoin au moment approprié de la journée. Cette prise en charge de la consommation en cigarettes des patients crée une surcharge de travail pour le personnel puisque celui-ci doit gérer administrativement la distribution de cigarettes.

Cette gestion administrative supplémentaire réduit le temps que le personnel des centres fermés peut effectivement consacrer au soin des patients. De plus, de nombreux litiges peuvent survenir entre le patient et le personnel distribuant les cigarettes. Par exemple, le patient peut prétendre ne pas avoir reçu le nombre de cigarettes auquel il a droit, alors que la personne distribuant les cigarettes affirme le contraire. Ces litiges sont bien sûr néfastes pour la sérénité au sein de l'établissement.

L'invention a pour but de présenter un distributeur de produits utilisés pour satisfaire à une dépendance permettant de gérer la distribution de ces produits, tout en garantissant un contrôle de la consommation du patient.

Pour résoudre ce problème, il est donc prévu, suivant l'invention, un distributeur caractérisé en ce qu'il comprend une mémoire reliée à l'unité de gestion et agencée pour stocker des données de distribution propres à chaque utilisateur faisant partie d'un ensemble d'utilisateurs, chacune desdites données ayant un premier champ destiné à stocker une première valeur indiquant un premier intervalle de temps minimum entre deux distributions du produit ainsi qu'un deuxième champ destiné à stocker une deuxième valeur indiquant la quantité de produit à distribuer dans ledit intervalle, ledit distributeur comprenant également au moins un module d'identification relié à l'unité de gestion et agencé pour identifier chacun des utilisateurs qui présentent une requête au module d'identification et générer un signal d'identification propre à chaque utilisateur qui a été identifié, l'unité de gestion étant agencé pour produire, sur base du signal d'identification reçu du module d'identification, l'adresse mémoire où est stockée la donnée attribuée à l'utilisateur identifié et à lire la donnée correspondante à l'utilisateur identifié, l'unité de gestion étant agencée pour déterminer un deuxième intervalle de temps qui, pour l'utilisateur identifié, s'est écoulé depuis la dernière transaction et pour, si le deuxième intervalle de temps déterminé est supérieur au premier intervalle de temps indiqué dans le premier champ de la donnée de l'utilisateur identifié, générer un premier signal de commande et un second signal de commande si le deuxième intervalle de temps est inférieur au premier intervalle de temps, ladite unité de gestion étant également agencée pour activer sous contrôle du premier signal de commande ledit mécanisme de distribution et pour déterminer sur base du deuxième champ la quantité totale de produit à distribuer et pour annuler la requête sous contrôle du second signal de commande.

Le distributeur identifie l'utilisateur grâce à son module d'identification et va rechercher dans sa mémoire les données de distribution personnelles de l'utilisateur identifié. La gestion de ces données est traitée par l'unité de gestion qui détermine si oui ou non l'utilisateur identifié à le droit de recevoir la quantité de produit au moment de sa requête. Ce distributeur permet donc une distribution contrôlée de produits, par exemple des cigarettes, pour l'ensemble des utilisateurs ce qui permet au personnel du centre fermé de ne plus s'occuper de cette distribution et donc de pouvoir s'occuper d'avantage des patients. De plus, ce type de distribution permet de diminuer considérablement les litiges entre le personnel du centre fermé et les patients, puisque la distribution est gérée par le distributeur ce qui supprime les erreurs humaines de distribution et met le personnel à l'abri de conflits concernant la distribution. Enfin, cette distribution permet de réduire progressivement et en douceur la consommation de ces produits, par exemple en programmant une réduction.

Selon une première forme de réalisation, le distributeur comprend une entrée de commande reliée à une unité de validation, cette unité de validation étant reliée à l'unité de gestion, au mécanisme de distribution et à une interface agencée pour transmettre des messages à l'utilisateur, ladite unité de validation étant agencée pour recevoir un signal d'acceptation ou un signal de non acceptation fourni à l'entrée de commande par l'utilisateur, l'unité de validation étant agencé pour annuler le premier signal de commande sur base du signal de non acceptation et pour permettre le transfert du premier signal de commande sur base du signal d'acception.

De cette manière, le distributeur peut communiquer des informations à l'utilisateur via l'interface et l'utilisateur pourra, par l'intermédiaire de l'entrée de commande, communiquer avec le distributeur.

Selon une deuxième forme de réalisation, le mécanisme de distribution est pourvu d'au moins un réservoir pour stocker une réserve dudit produit, chaque réservoir est relié à un mécanisme de prise dudit produit, ledit mécanisme de prise étant agencé pour être positionné devant une extrémité haute d'un canal de sortie pourvue également d'une extrémité basse débouchant vers un réceptacle, chaque réservoir ayant une pente d'un angle α prédéterminé permettant au produit d'être dirigé par gravité vers un logement du mécanisme de prise, lequel logement est pourvu d'une ouverture d'entrée et d'une ouverture de sortie, lequel logement est agencé pour recevoir ledit produit et est relié à un élévateur permettant au logement de se déplacer vers le haut jusqu'à l'extrémité haute du canal et revenir à sa position initiale, ledit logement ayant une pente β maintenant ledit produit dans le logement jusqu'à l'extrémité haute du canal de sortie, l'ouverture de sortie étant agencée pour correspondre à l'extrémité haute du canal de sortie, le canal de sortie étant destiné à diriger ledit produit jusqu'au réceptacle.

Ainsi, le produit est dirigé par gravité vers le logement en position initiale et sera ensuite acheminé vers l'extrémité haute du canal par l'élévateur. Arrivé à l'extrémité haute du canal, le produit sort du logement et entre dans le canal destiné à diriger le produit vers le réceptacle où l'utilisateur pourra en prendre possession. De plus, ce mécanisme de distribution est particulièrement bien adapté à la distribution de produit fragile, tel que des cigarettes, puisqu'il permet de garantir qu'un nombre très restreint de cigarettes ne soit endommagé durant la distribution. De même, l'angle d'inclinaison α permet aux cigarettes de ne pas s'écraser les unes contre les autres.

D'autres formes de réalisation du distributeur, suivant l'invention, sont indiquées dans les revendications dépendantes annexées.

D'autres détails et particularités de l'invention seront données dans la description ci-après, donnée à titre non limitatif avec référence aux dessins annexés.

Dans les dessins :
La figure 1 illustre schématiquement une vue de face d'une forme de réalisation d'un distributeur suivant l'invention;
La figure 2 illustre schématiquement une vue en coupe d'une forme de réalisation du mécanisme de distribution suivant l'invention;
La figure 3 illustre schématiquement une forme de réalisation du distributeur suivant de l'invention;
La figure 4 montre, à l'aide d'un diagramme, l'opération d'identification de l'utilisateur et de détermination des données de distribution;
La figure 5 illustre, selon le sens de rotation d'un moteur, le déplacement de l'un ou l'autre des logements; et
La figure 6 a et b illustre, à l'aide d'un diagramme, l'opération d'identification de l'utilisateur et de détermination des données de distribution, pour une autre forme de réalisation.

Dans les dessins une même référence a été attribuée à un même élément ou à un élément analogue.

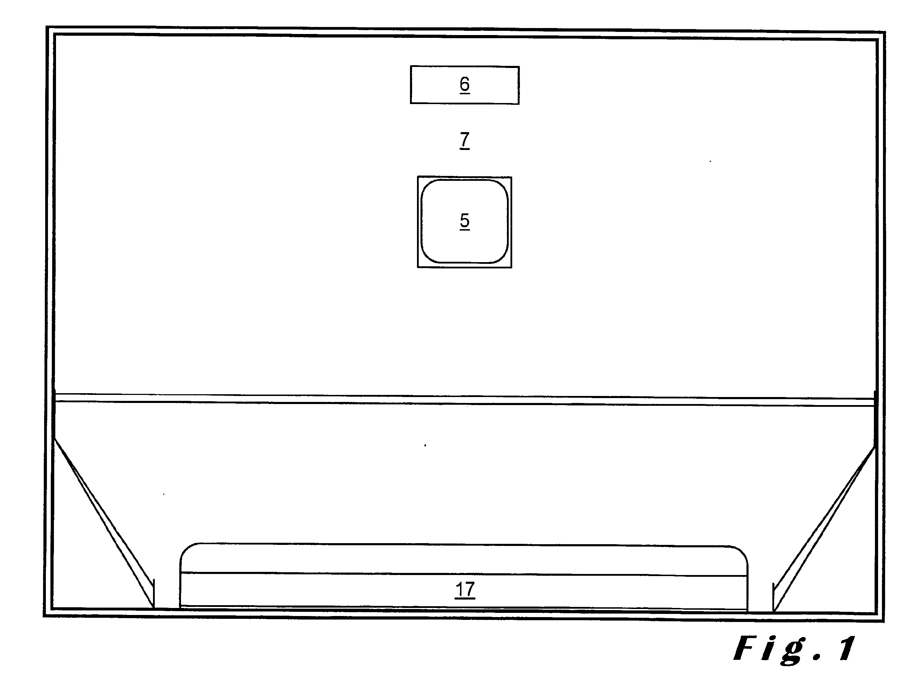

Faisant référence à la figure 1, le distributeur comprend un module d'identification 5 auquel l'utilisateur présente une carte ou un badge, une interface 6, une entrée de commande 7 et un réceptacle 17 dans lequel le produit distribué est remis à l'utilisateur. Ces composants sont montrés, dans l'exemple illustré, sur un couvercle d'un boîtier, à l'intérieur duquel est logé un mécanisme de distribution.

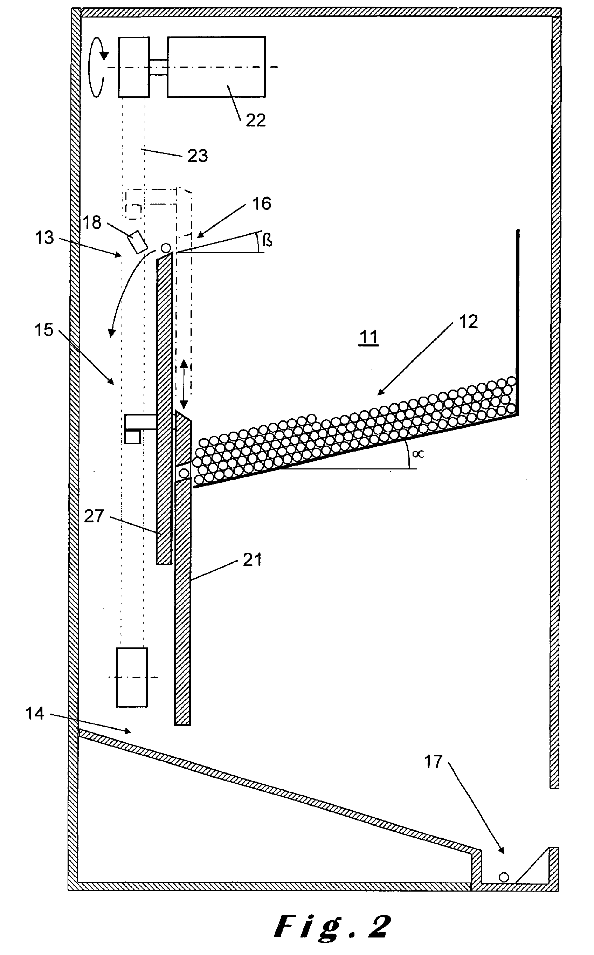

Selon une forme préférentielle de réalisation illustrée à la figure 2, le mécanisme de distribution est pourvu d'au moins un réservoir 11 agencé pour stocker une réserve de produits, dans l'exemple illustré, des cigarettes 12. Le distributeur pouvant également être utilisé pour d'autres produits tels que de la drogue, de l'alcool, etc. Le réservoir communique avec un mécanisme de prise dudit produit. Ledit mécanisme de prise est en outre pourvu d'un logement 16 qui est transportable vers un canal de sortie 15 pourvu d'une extrémité basse 14 débouchant dans le réceptacle 17.

Le réservoir 11 a une pente d'un angle α prédéterminé permettant au produit d'être dirigé par gravité vers le logement 16 du mécanisme de prise. L'inclinaison de la pente suivant l'angle α est particulièrement importante lorsque le produit à distribuer est fragile, comme c'est le cas pour des cigarettes. Dans ce cas-là, l'angle α sera compris entre 13° et 17°, de préférence 15°, de manière à éviter que les cigarettes placées dans le réservoir ne s'écrasent. Le produit, en fonction de l'inclinaison de la pente, glissera ou roulera vers le logement 16 du mécanisme de prise lorsque ce dernier se présentera devant une cigarette stockée dans le réservoir. Le mécanisme de prise comporte un élévateur 21 formé par une plaque dans laquelle est situé le logement 16. L'élévateur permet au logement de se déplacer de bas en haut et vice versa entre une extrémité haute 13 du canal et sa position la plus basse où le logement 16 est face au fond du réservoir. L'élévateur est entraîné par un moteur 22 qui est relié à la plaque par exemple à l'aide d'une courroie ou d'une chaîne. Lorsqu'une cigarette se trouve dans le logement 16, elle est retenue dans ce dernier par une plaque 27 qui s'étend en parallèle au trajet de l'élévateur. Ledit logement ayant une pente β comprise entre 13° et 17°, de préférence 15°. Lorsque l'élévateur arrive à l'extrémité haute 13 du canal, le logement n'est plus obturé par la plaque 27, car le logement a atteint le sommet de la plaque 27. La pente β permet alors à la cigarette de quitter le logement et de rouler sur le sommet de la plaque 27 pour tomber dans le canal de sortie 15. Le canal de sortie étant destiné à diriger ledit produit jusqu'au réceptacle 17. Pendant le mouvement vertical de l'élévateur, les cigarettes sont légèrement brassées, ce qui permet de ne pas laisser toujours les mêmes cigarettes dans le fond du réservoir et de garantir ainsi le maintien de cigarettes en bon état.

De plus, le distributeur peut comprendre au moins un détecteur 18, par exemple une cellule photoélectrique placée à l'extrémité haute dudit canal de sortie. D'autres détecteurs peuvent en outre être positionnés dans le distributeur de manière à contrôler le parcours du produit lors de sa distribution. Le détecteur est relié à une unité de gestion et est agencé pour émettre un signal de détection indiquant, sur base de la quantité de produit introduit dans le canal de sorite 15, la quantité de produit effectivement distribuée. En effet, lorsqu'une cigarette vient couper le faisceau de détection produit par le détecteur, un signal est généré indiquant le passage de la cigarette devant le détecteur. Le nombre de coupures du faisceau correspondant au nombre de cigarettes détectées et donc distribuées. Si la cigarette ne passe pas devant le détecteur, aucun signal ne sera produit ce qui indiquera que la cigarette n'est pas remise au patient. Dans ce dernier cas, le mécanisme de prise fera une nouvelle tentative pour prélever une cigarette. Plusieurs tentatives peuvent être envisagées si le détecteur 18 ne détecte pas le passage d'une cigarette. Après un nombre prédéterminé de tentatives infructueuses, l'unité de gestion conclura que le réservoir est vide et produira un message qui l'indiquera. Le cas échéant, l'unité de gestion peut prévoir de prendre une cigarette dans un autre réservoir si il y a plusieurs réservoirs contenant la même marque de cigarettes ou si l'utilisateur a indiqué qu'il se contente de plus que d'une seule marque. L'unité de gestion mémorise temporairement jusqu'à ce que le réservoir soit rempli à nouveau que le réservoir est vide afin d'en tenir compte lors de prochaines requêtes.

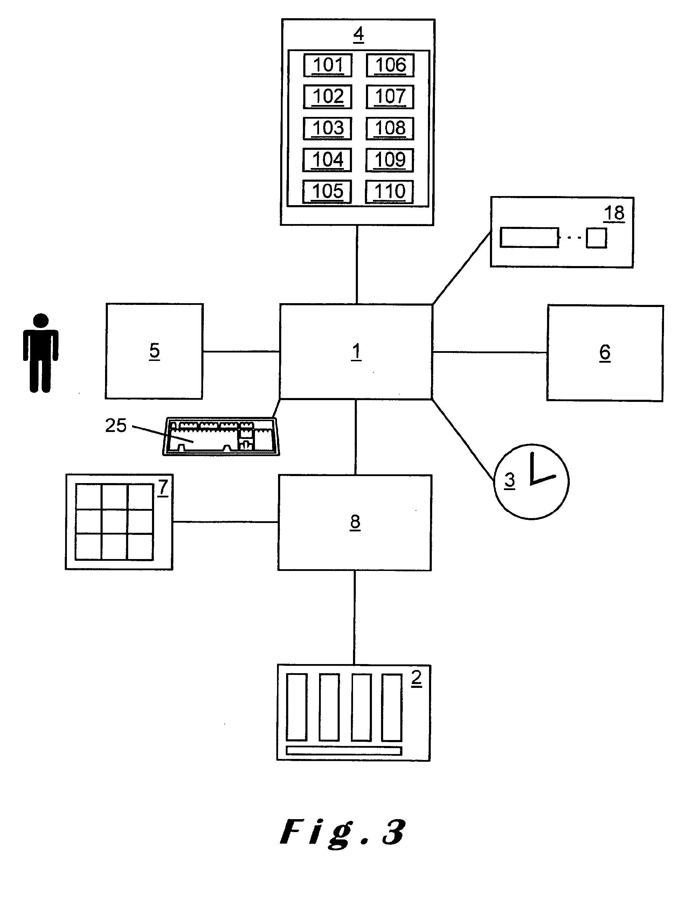

Comme illustré à la figure 3, le distributeur comprend l'unité de gestion 1 reliée au mécanisme de distribution 2 et agencée pour contrôler ce dernier. Cette unité de gestion 1 est reliée à une horloge 3. Une mémoire 4 est reliée à l'unité de gestion et agencée pour stocker des données de distribution. Le distributeur comprend en outre le module d'identification 5 relié à l'unité de gestion et agencé pour identifier chaque utilisateur se présentant au module d'identification.

Le module d'identification peut par exemple être un lecteur de badge, de carte magnétique ou de carte à puce. De même, le module d'identification peut aussi être un identificateur biométrique identifiant les caractères morphologiques propres à l'utilisateur.

L'interface 6 est également reliée à l'unité de gestion pour permettre au distributeur de communiquer des informations à l'utilisateur. L'interface peut être un écran d'affichage ou un dispositif sonore. De préférence, le distributeur comprend une entrée de commande 7 reliée à une unité de validation 8, elle-même reliée à l'unité de gestion. L'entrée de commande peut être à reconnaissance vocale ou munie d'une ou plusieurs touches. De plus, l'unité de gestion peut être reliée à un détecteur de passage 18 permettant à l'unité de gestion de vérifier que le produit a été distribué correctement. Enfin, l'unité de gestion peut être raccordée à un moyen d'introduction de données 25 permettant d'encoder ou de modifier les paramètres d'utilisations du distributeur et des données des utilisateurs. Ces données de distribution comprennent pour chaque utilisateur un nombre prédéterminé de champs tel qu'un premier champ 101 indiquant l'intervalle de temps minimum entre deux distributions, un deuxième champ 102 indiquant la quantité de produit à distribuer dans l'intervalle de temps, un troisième champ 103 indiquant la quantité totale restante de produit à distribuer pour une période de temps déterminée par exemple pour le jour même, un quatrième champ 104 indiquant la quantité journalière de produit à distribuer et, de préférence, un cinquième champ 105 indiquant le moment de la première distribution pour cet utilisateur, un sixième champ 106 indiquant le type de cigarette de l'utilisateur, un septième champ 107 indiquant si l'utilisateur à droit au report ou non, un huitième champ 108 indiquant le nombre de cigarettes reportées, un neuvième champ 109 indiquant le nombre de cigarettes entre deux rapports et un dixième champ 110 indiquant le nombre de demandes non valides.

Le fonctionnement du distributeur sera maintenant décrit plus en détail.

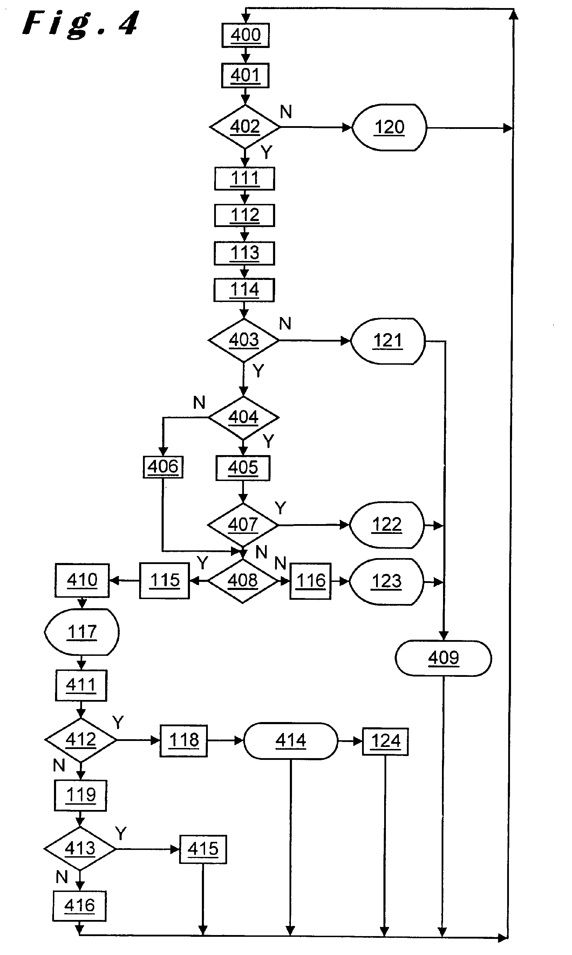

Faisant référence aux figures 3 et 4, l'utilisateur, introduit sa requête en présentant par exemple son badge magnétique (400). L'unité de gestion (401) vérifie l'heure à laquelle le badge est présenté. Le module d'identification ensuite soit identifie (402,Y) le badge, soit ne l'identifie pas (402,N). Les raisons de non identification pourraient être que le badge a été désactivé suite à la déclaration de son vol, que l'utilisateur n'a plus droit au produit distribué ou que le badge est un faux, etc. Dans le cas où le badge n'est pas identifié, l'unité de gestion génère un message de non identification (120) et le transmet à l'unité d'affichage. Après l'affichage, le module d'identification se remet en mode d'attente (400). Lorsque l'identification a été effectuée par le module d'identification, celui-ci génère (111) un signal d'identification et le transmet à l'unité de gestion. Ensuite, l'unité de gestion, sur base du signal d'identification, va générer (112) l'adresse mémoire où est stockée la donnée de l'utilisateur identifié de manière à pouvoir lire (113) les champs propres à l'utilisateur identifié. Par exemple, le signal de détection pourrait comprendre un nombre correspondant au numéro du badge, grâce auquel l'unité de gestion pourrait retrouver l'adresse mémoire de la donnée correspondant à l'utilisateur du badge. Celle-ci prélève (114) alors le signal de l'horloge de manière à vérifier (403) que l'heure actuelle se trouve dans la plage d'heure prédéterminée d'activité. Dans le cas où elle ne se trouve pas dans la plage d'heure prédéterminée d'activité (403,N), l'unité de gestion génère (121) un message de veille et le transmet à l'unité d'affichage, le message de veille pouvant être «pas de cigarettes disponible avant 6 heures». Après l'affichage, l'unité de gestion incrémente 409 de un le dixième champ de la donnée.

Lorsque, le distributeur a constaté que la requête est située dans la plage horaire d'activité (403,Y), L'unité de gestion, après lecture des informations contenues dans les champs de la donnée attribuées à l'utilisateur identifié (113), vérifie (404) alors sur base de la deuxième et de la troisième valeur, le nombre de cigarettes à distribuer. Par exemple, si la deuxième valeur du deuxième champ est supérieure à la troisième valeur du troisième champ (404,Y) alors le nombre de cigarettes à distribuer est égal au nombre indiqué dans le troisième champ c'est à dire que l'unité de gestion attribue (405) tout le restant du quota journalier de produit à cette distribution. Si la deuxième valeur du deuxième champ est inférieure à la troisième valeur du troisième champ (404,N), alors le nombre de cigarettes à distribuer est égal (406) au nombre indiqué dans le deuxième champ. Si le nombre de cigarettes indiqué dans le troisième champ est égal à zéro (407,Y) alors l'unité de gestion génère et transmet un deuxième message d'information (122) par exemple: «revenez demain il vous reste 00 cigarettes». Après l'affichage, l'unité de gestion incrémente, de un, le dixième champ (409).

Si le nombre indiqué au troisième champ est supérieur à zéro (407,N), l'unité de gestion va vérifier (408) sur base d'une première valeur, d'une cinquième valeur et du temps donné par l'horloge si l'utilisateur est autorisé à recevoir, par exemple des cigarettes. Par exemple, si la donnée correspondante à l'utilisateur indique dans le premier champ un premier intervalle de temps minimum entre deux distributions de 2 heures, le cinquième champ indique que l'utilisateur a reçu des cigarettes à 12 h 30. L'unité de gestion additionne donc 12 h 30 + 2 h ce qui indique 14 h 30. L'unité de gestion lit l'horloge qui dans ce cas-ci, indique 14 h 45. L'intervalle de temps minimum étant dépassé (408,Y), l'unité de gestion génère donc un premier signal de commande (115).

Dans le cas où l'intervalle de temps minimum ne serait pas encore écoulé entre le moment de la dernière distribution et l'heure de présentation de l'utilisateur au distributeur (408,N), l'unité de gestion génère un second signal de commande le second signal (116) qui est destiné à annuler la requête. De plus, l'unité de gestion génère et transmet alors un troisième message d'information (123) par exemple : «revenez à 18 h 00 reste xx cigarettes». Après l'affichage, l'unité de gestion incrémente, de un, le dixième champ (409), ce dixième champ indiquant au personnel du centre fermé le nombre de démarches infructueuses pour chaque utilisateur. Ainsi, le personnel du centre fermé pourra déterminer le ou les utilisateur(s) ayant des difficultés avec le distributeur et pourra donc aider, de manière plus personnelle, le ou les utilisateurs à utiliser le distributeur. Une fois, le dixième champ incrémenté, le module d'identification se met (400) en mode d'attente.

Après avoir généré (115) le premier signal de commande, l'unité de gestion le transmet à l'unité de validation. Ensuite, l'unité de gestion modifie le cinquième champ en y indiquant (410) l'heure actuelle, et génère et transmet (117) un message de validation à l'interface. Par exemple, le message de validation pourrait demander à l'utilisateur de confirmer la quantité de sa demande de distribution.

Ensuite, l'unité de validation, ayant reçu alors le premier signal de commande transmis par l'unité de gestion, active (411) l'entrée de commande, l'entrée de commande pouvant être un bouton qui s'allume lors de la demande de confirmation et que l'utilisateur devra enfoncer pour confirmer sa demande avant que s'écoule une période de temps prédéterminé. Si l'utilisateur enfonce le bouton, l'entrée de commande génère et transmet (118) un signal d'acceptation à l'unité de validation qui autorise, sur base de ce dernier, le transfert du premier signal de commande (412,Y) permettant à l'unité de gestion d'activer (414), sur base de la sixième valeur (106), le mécanisme de prise associé au type de cigarettes de l'utilisateur, de manière à distribuer le nombre de cigarettes déterminé précédemment. De plus l'unité de gestion activera (124) le détecteur de passage de manière à vérifier que tout le produit a été effectivement distribué à l'utilisateur. Une fois, la distribution effectué, le module d'identification se met (400) en mode d'attente. Le non enfoncement (412,N) produira un signal de non acceptation sur base duquel l'unité de validation annulera (119) le premier signal de commande. Dans ce cas, l'unité de gestion détermine sur base d'un septième champ (107) si l'utilisateur a droit au report (413); si oui (413,Y), l'unité de gestion indique dans un huitième champ (108) le nombre de cigarettes reporté (415). Cette quantité de cigarettes reportée viendra s'ajouter à la quantité de produit à distribuer dans le prochain intervalle de temps. Si non (413, N), les cigarettes seront perdues pour l'utilisateur (416). Après avoir examiné le report, le module d'identification se met (400) en mode d'attente.

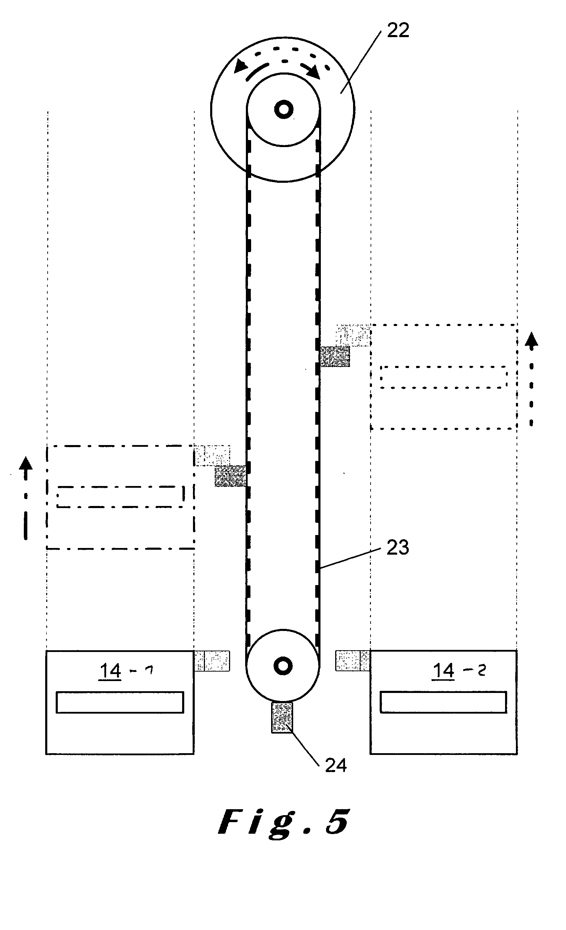

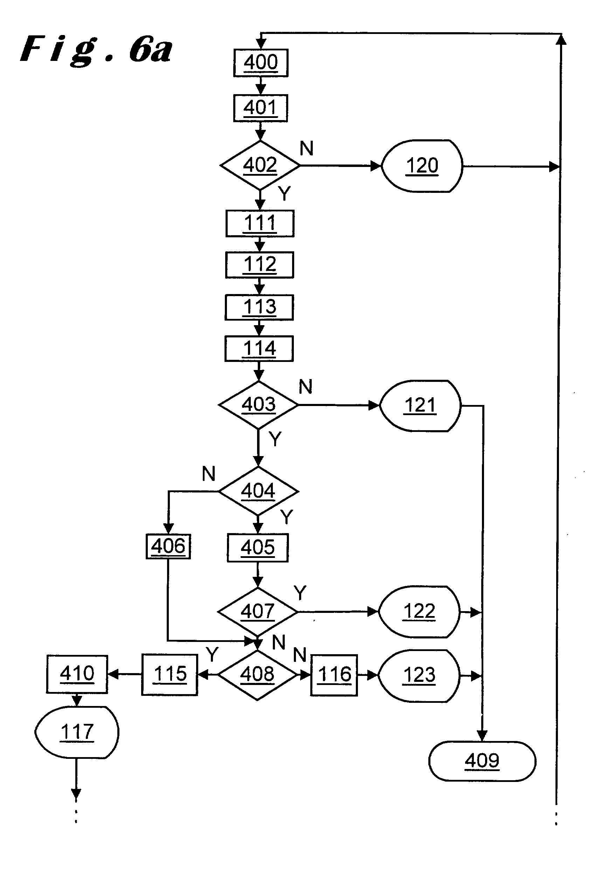

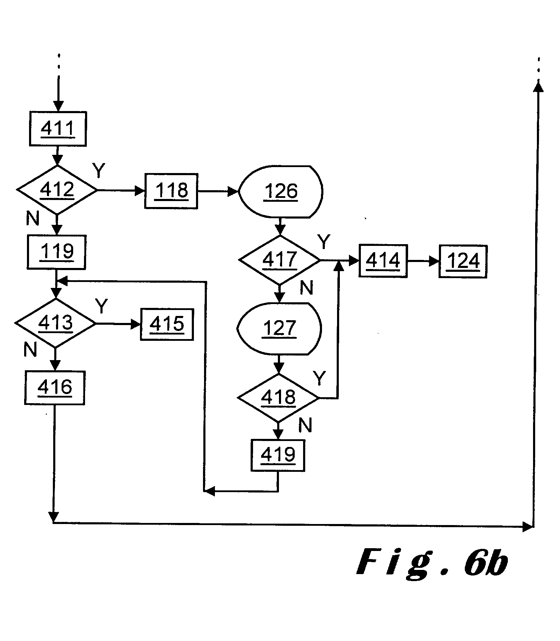

Selon une autre forme de réalisation illustré aux figures 6a et 6b, l'utilisateur pourrait, lorsqu'il a droit à un certain nombre de cigarettes, donner instruction à la machine d'en distribuer une quantité inférieure. Ainsi, l'unité de gestion pourrait générer un second message indiquant d'une part à l'utilisateur le nombre de cigarettes qu'il peut recevoir maintenant et d'autre part, invitant l'utilisateur à introduire par l'entrée de commande combien de cigarettes, il désire recevoir. Le nombre de cigarettes non distribuées à cette distribution pouvant être reporté, perdu ou encore être autorisé à la distribution. Ainsi, par exemple, l'unité de gestion génère et transmet (126) alors un quatrième message à l'interface demandant à l'utilisateur s'il désire recevoir l'ensemble des cigarettes attribuées à cette distribution. Ce quatrième message pouvant être :« si vous désirez moins que xx cigarettes appuyer sur le bouton ». Si l'utilisateur n'enfonce pas le bouton (417,N), l'entrée de commande génère et transmet à l'unité de gestion un signal de distribution totale qui permet, comme expliqué dans la forme de réalisation précédente, d'activer (414), sur base du sixième champ (106), le mécanisme de prise associé au type de cigarettes de l'utilisateur, de manière à distribuer le nombre de cigarettes déterminé précédemment. S'il l'utilisateur enfonce (417,Y) le bouton, l'entrée de commande génère et transmet à l'unité de gestion un signal de distribution partielle sur base duquel l'unité de gestion génère et transmet (127) un cinquième message invitant l'utilisateur à encoder à l'aide d'un pavé numérique inclus dans l'entrée de commande le nombre de cigarettes qu'il désire recevoir. Une fois, le nombre de cigarettes désiré encodé par l'utilisateur via le pavé numérique, l'unité de gestion vérifiée 418 si nombre encodé n'est pas supérieur au nombre de cigarettes précédemment déterminé. Si oui (418,Y), le nombre de cigarettes distribuées sera égale au nombre de cigarettes précédemment déterminé. Alors que, si le nombre encodé est inférieur au nombre précédemment déterminé (418, N), le nombre de cigarettes à distribuer sera égal au nombre de cigarettes encodé. Ensuite, l'unité de gestion calculera (419) le nombre de cigarettes non-demandées en soustrayant le nombre de cigarettes encodé par le nombre de cigarettes précédemment déterminé. Les cigarettes non-demandées pouvant faire l'objet d'un report ou non comme dans la figure 5.

Selon, le type de cigarette à distribuer l'unité de gestion sur base du sixième champ choisira d'activer l'un des mécanismes de prise. De préférence le distributeur comprendra huit mécanismes animés par quatre moteurs, chaque moteur permettant selon le sens de rotation du moteur de déplacer alternativement un premier ou un deuxième logement de respectivement un premier et un second mécanisme de distribution. Selon la figure 5, chaque moteur 22 est pourvu d'une courroie 23 pourvue d'un ergot 24 agencé pour intercepter et entraîner, selon le sens de rotation de la courroie, l'un des deux logements 14. Lorsque le moteur tourne dans le sens horloger l'ergot situé sur la courroie entraîne le logement de gauche et lorsque le moteur tourne dans le sens anti horloger l'ergot entraîne le logement de droite.

En outre, une fois la distribution effectuée, l'unité de gestion peut déterminer une troisième valeur à inscrire dans le troisième champ 103 en soustrayant une troisième valeur indiquée dans ce même troisième champ 103 à une valeur correspondant au signal de détection 124. Par exemple, l'utilisateur se fait distribuer 3 cigarettes, la quantité de cigarettes indiquée dans le troisième champ est de 10 cigarettes, l'unité de gestion soustrait donc 10 moins 3 et indique dans le troisième champ le nombre 7. Il reste donc 7 cigarettes à distribuer pour cet utilisateur.

En outre l'unité de gestion peut aussi (ré)initialiser la troisième valeur dudit troisième champ, à une heure prédéterminée sur base du quatrième champ, de manière à remettre le nombre de cigarettes de départ. Par exemple, à minuit tous les troisièmes champs ainsi que les huitièmes champs de tous les utilisateurs sont respectivement réinitialisés, ainsi les utilisateurs auront de nouveau la quantité journalière restante de cigarettes à distribuer pour une période déterminée à leur maximum et le nombre de cigarettes reportées égal à 0.

En outre, l'unité de gestion est liée à un moyen d'introduction de données 25 (illustré à la figure 1) permettant à un opérateur de modifier, de supprimer ou d'ajouter des données à la mémoire. Ce moyen d'introduction peut être un clavier amovible qui permet à un opérateur d'introduire des nouvelles données correspondant à un nouvel utilisateur, de modifier des données existantes ou encore de supprimer les données d'un utilisateur de manière à l'empêcher d'avoir accès à la distribution. Comme ce clavier se branche uniquement lors de l'opération d'introduction et ne reste donc pas constamment relié au distributeur, il est impossible pour une personne ne possédant pas de clavier de modifier les données personnelles des utilisateurs.

De plus, l'unité de gestion est agencée pour établir un rapport d'activité indiquant une série de signaux et/ou messages produits par le distributeur durant une période de temps prédéterminée et pour transmettre ce rapport d'activité à une unité d'affichage et/ou de stockage. L'unité d'affichage peut être une imprimante et l'unité de stockage, un lecteur enregistreur de disque. De cette manière, une analyse détaillée du comportement du distributeur ou des interactions des utilisateurs avec le distributeur peut être réalisée de manière à pouvoir détecter un problème mécanique ou électronique du distributeur, soit de détecter un problème comportemental de certains utilisateurs vis-à-vis du distributeur. Cette analyse peut ainsi aider le personnel du centre fermé à reconnaître le ou les utilisateur(s) qui ne comprenne(nt) pas le mode de fonctionnement du distributeur. Outre les champs déjà décrits précédemment, les données pourront comprendre un neuvième champ indiquant le nombre de cigarettes entre deux rapports permettant au personnel du centre fermé de déterminer le nombre de cigarettes à prévoir pour chaque utilisateur pour une période déterminée.

L'imprimante peut également imprimer des données du système telles que l'heure et la date, des données des utilisateurs et des données diagnostiques, comme par exemple le nombre de demandes non valides.

De plus, le distributeur sera conçu de manière à résister aux agressions. Il sera de préférence en métal, par exemple en acier inoxydable, et ne présentera pas d'arêtes vives de manière à éviter que le ou les utilisateur(s) ne puisse(nt) se blesser sur le distributeur.

De même, le distributeur pourra être pourvu d'une ouverture pour accéder aux diverses prises ou ports de connections, par exemple du clavier, de l'imprimante, du réseau, etc.

La prise réseau pourrait permettre de relier le distributeur à un réseau de manière à ce que soit un opérateur, soit un employé de centre fermé puisse contrôler les données à partir d'un autre terminal lié au réseau.

### REFERENCES DES FIGURES

- 1: unité de gestion
- 2: mécanisme de distribution
- 3: horloge
- 4: mémoire
- 5: module d'identification
- 6: interface
- 7: entrée de commande
- 8: unité de validation
- 11: réservoir
- 12: cigarette
- 13: extrémité haute
- 15: canal de sortie
- 16: logement
- 17: réceptacle
- 18: détecteur de passage
- 21: élévateur
- 22: moteur
- 23: courroie
- 24: ergot
- 25: moyen d'introduction de données
- 27: plaque
- 101: premier champ indiquant l'intervalle de temps minimum entre deux distributions
- 102: deuxième champ indiquant la quantité de produit à distribuer dans l'intervalle de temps
- 103: troisième champ indiquant la quantité totale restante de produit à distribuer pour une période de temps déterminée
- 104: quatrième champ indiquant la quantité totale de produit à distribuer
- 105: cinquième champ indiquant le moment de la dernière distribution pour cet utilisateur
- 106: sixième champ indiquant le type de cigarette de l'utilisateur
- 107: septième champ indiquant si l'utilisateur à droit au report ou non
- 108: huitième champ indiquant le nombre de cigarettes reportées
- 109: neuvième champ indiquant le nombre de cigarettes entre deux rapports
- 110: dixième champ indiquant le nombre de demandes non valides

## Revendications

1. Distributeur de produit utilisé pour satisfaire à une dépendance pourvu d'un mécanisme de distribution lié à une unité de gestion agencée pour déterminer un taux de distribution dudit produit, cette unité de gestion étant reliée à une horloge, **caractérisé en ce que** le distributeur comprend une mémoire reliée à l'unité de gestion et agencée pour stocker des données de distribution propres à chaque utilisateur faisant partie d'un ensemble d'utilisateurs, chacune desdites données ayant un premier champ destiné à stocker une première valeur indiquant un premier intervalle de temps minimum entre deux distributions du produit ainsi qu'un deuxième champ destiné à stocker une deuxième valeur indiquant la quantité de produit à distribuer dans ledit intervalle, ledit distributeur comprenant également au moins un module d'identification relié à l'unité de gestion et agencé pour identifier chacun des utilisateurs qui présentent une requête au module d'identification et générer un signal d'identification propre à chaque utilisateur qui a été identifié, l'unité de gestion étant agencée pour produire sur base du signal d'identification reçu du module d'identification, l'adresse mémoire où est stockée la donnée attribuée à l'utilisateur identifié et à lire la donnée correspondante à l'utilisateur identifié, l'unité de gestion étant agencée pour déterminer un deuxième intervalle de temps qui pour l'utilisateur identifié s'est écoulé depuis la dernière transaction et pour, si le deuxième intervalle de temps déterminé est supérieur au premier intervalle de temps indiqué dans le premier champ de la donnée de l'utilisateur identifié, générer un premier signal de commande et un second signal de commande si le deuxième intervalle de temps est inférieure au premier intervalle de temps, ladite unité de gestion étant également agencée pour activer sous contrôle du premier signal de commande ledit mécanisme de distribution et pour déterminer sur base du deuxième champ la quantité totale de produit à distribuer et pour annuler la requête sous contrôle du second signal de commande.

2. Distributeur, suivant la revendication 1, **caractérisé en ce qu'**il comprend une entrée de commande reliée à une unité de validation, cette unité de validation étant reliée à l'unité de gestion et au mécanisme de distribution et à une interface agencée pour transmettre des messages à l'utilisateur, ladite unité de validation étant agencée pour recevoir un signal d'acceptation ou un signal de non acceptation fourni à l'entrée de commande par l'utilisateur, l'unité de validation étant agencée pour annuler le premier signal de commande sur base du signal de non acceptation et pour permettre le transfert du premier signal de commande sur base du signal d'acception.

3. Distributeur suivant la revendication 2, **caractérisé en ce que** l'unité de gestion est agencée pour générer, sur base du second signal de commande, un premier message d'information indiquant l'annulation de la requête et transmettre le premier message à l'interface.

4. Distributeur, suivant l'une des revendications 1 à 3, **caractérisé en ce que** le mécanisme de distribution est pourvu d'au moins un réservoir pour stocker une réserve dudit produit, chaque réservoir est relié à un mécanisme de prise dudit produit, ledit mécanisme de prise étant agencé pour être positionné devant une extrémité haute d'un canal de sortie pourvu également d'une extrémité basse débouchant vers un réceptacle, chaque réservoir ayant une pente d'un angle α prédéterminé permettant au produit d'être dirigé par gravité vers un logement du mécanisme de prise, lequel logement est pourvu d'une ouverture d'entrée et d'une ouverture de sortie, lequel logement est agencé pour recevoir ledit produit et est relié à un élévateur permettant au logement de se déplacer vers le haut jusqu'à l'extrémité haute du canal et revenir à sa position initiale, ledit logement ayant une pente β maintenant ledit produit dans le logement jusqu'à l'extrémité haute du canal de sortie, l'ouverture de sortie étant agencée pour correspondre à l'extrémité haute du canal de sortie, le canal de sortie étant destiné à diriger ledit produit jusqu'au réceptacle.

5. Distributeur suivant l'une des revendications 1 à 4, **caractérisé en ce qu'**il comprend un détecteur agencé pour produire un signal de détection indiquant la quantité de produit arrivée dans le réceptacle.

6. Distributeur suivant la revendication 5, **caractérisé en ce que** chaque donnée comprend un troisième champ destiné à stocker une troisième valeur indiquant la quantité totale restante de produit à distribuer pour un période de temps prédéterminée, ladite unité de gestion étant agencée pour déterminer la troisième valeur à inscrire en soustrayant de la troisième valeur indiquée dans ledit troisième champ à la quantité reprise dans le signal de détection.

7. Distributeur suivant la revendication 6, **caractérisé en ce que** chaque donnée comprend un quatrième champ destiné à stocker une quatrième valeur indiquant la quantité journalière de produit à distribuer, l'unité de gestion étant agencée pour réinitialiser la troisième valeur, à une heure prédéterminée et sur base de ladite quatrième valeur.

8. Distributeur suivant l'une des revendications 1 à 7, **caractérisé en ce que** l'unité de gestion est reliée à un moyen d'introduction de données permettant à un opérateur de modifier, de supprimer ou d'ajouter des données à la mémoire.

9. Distributeur suivant l'une des revendications 1 à 8, **caractérisé en ce que** l'unité de gestion est agencée pour établir un rapport d'activité indiquant une série de signaux et/ou messages produits par le distributeur durant une période de temps prédéterminée et pour transmettre ce rapport d'activité à une unité d'affichage et/ou de stockage.

10. Distributeur suivant l'une des revendications 1 à 9, **caractérisé en ce que** le distributeur est fabriqué en métal.

11. Distributeur suivant la revendication 4, **caractérisé en ce que** le mécanisme de distribution comprend au moins une paire de logements et un moteur agencé pour déplacer selon le sens de rotation du moteur soit l'un soit l'autre logement de ladite paire, de sa position initiale jusqu'à l'extrémité haute du canal.
